# EUROPÄISCHE PATENTSCHRIFT

(11) **EP 3 924 115 B1**
(45) Veröffentlichungstag und Bekanntmachung des Hinweises auf die Patenterteilung: **22.01.2025**
(21) Anmeldenummer: 20705010.5
(22) Anmeldetag: 05.02.2020
(51) Int. Cl.: H01M 8/00, B21D 17/02

(54) **UMFORMWERKZEUG UND UMFORMVERFAHREN ZUR HERSTELLUNG EINER ÜBERDRUCKSOLLBRUCHSTELLE IN EINEM BATTERIEDECKEL**
FORMING DIE AND FORMING METHOD FOR PRODUCING AN OVERPRESSURE PREDETERMINED BREAKING POINT IN A BATTERY COVER
OUTIL DE FAÇONNAGE ET PROCÉDÉ DE FAÇONNAGE POUR PRODUIRE UN POINT DE RUPTURE VOULU DE SURPRESSION DANS UN COUVERCLE DE BATTERIE

(30) Priorität: 13.02.2019 DE 102019103606
(43) Veröffentlichungstag der Anmeldung: 22.12.2021
(73) Patentinhaber: Schuler Pressen GmbH, 73033 Göppingen (DE)
(72) Erfinder: ULLMANN, Bernd, 76327 Pfinztal (DE); BERKEFELD, Rainer, 53604 Bad Honnef (DE); BRAUN, Matthias, 73092 Heiningen (DE); BECKER, Torsten, 73079 Süßen (DE)
(74) Vertreter: Rüger Abel Patentanwälte PartGmbB
(86) Internationale Anmeldenummer: PCT/EP2020/052899
(87) Internationale Veröffentlichungsnummer: WO 2020/165003

(56) Entgegenhaltungen:
- JP-A- 2004 111 155
- US-A1- 2014 017 524
- US-A1- 2016 296 990

## Beschreibung

Die Erfindung bezieht sich auf ein Umformwerkzeug sowie ein Umformverfahren zur Herstellung einer Überdrucksollbruchstelle in einem Batteriedeckel für ein Batteriezellengehäuse.

EP 1 108 269 B1 offenbart ein Batteriezellengehäuse aus einem Batteriezellenkörper und einem Batteriedeckel. In einen Boden des Batteriezellenkörpers kann eine nutförmige Sollbruchstelle vorhanden sein, an der der Boden bei einem Überdruck im Batteriezellengehäuse aufreißt. Die nutförmige Überdrucksollbruchstelle ist bogenförmig ausgestaltet und verläuft in Umfangsrichtung nicht vollständig geschlossen, wodurch eine Art Scharnier gebildet ist, an dem der sich bei Überdruck öffnende und durch die nutförmige Überdrucksollbruchstelle begrenzte Deckelbereich verbunden bleibt.

JP 2004-111155 A beschreibt ein Umformwerkzeug zur Herstellung einer Überdrucksollbruchstelle in einem Batteriedeckel für ein Batteriezellengehäuse. Das Umformwerkzeug hat ein Matrizenwerkzeug sowie ein Stempelwerkzeug. Im Matrizenwerkzeug ist eine Umformvertiefung mit einem Vertiefungsgrund vorhanden, der von zwei Vertiefungsflanken begrenzt wird. Das Stempelwerkzeug hat ein Stempelteil. Die Länge des Stempelteils in einer Hubrichtung entspricht der Tiefe der Umformvertiefung. Zum Einbringen von Kerben kann außerdem ein Kerbwerkzeug vorhanden sein.

Weitere Batteriegehäuse sind beispielsweise aus WO 2014/040676 A1 und DE 698 29 711 T2 bekannt. Diese weisen im Batteriegehäuse eine im Querschnitt V-förmige Nut auf, die ringförmig geschlossen ist.

DE 10 2013 220 957 A1 beschreibt eine Batterie und ein Verfahren zur Sicherung der Batterie. Die Batterie hat ein Batteriegehäuse, das ein Überdruckventil, ein Druckausgleichselement und eine Temperiereinrichtung, wie eine Kühleinrichtung, umfassen kann.

US 2016/0296990 A1 beschreibt eine Presse zum Herstellen einer Metallmembran für einen Sensor im Automobilbereich. Die Presse hat ein Matrizenwerkzeug sowie ein Stempelwerkzeug. Im Matrizenwerkzeug ist eine Umformvertiefung vorhanden. Am Stempelwerkzeug ist ein Stempelteil angeordnet, dessen Länge genauso groß ist wie die Tiefe der Umformvertiefung.

Die Firma BS & B GmbH bieten Umkehrberstscheiben an, die zum Druckabbau beim Auftreten eines bestimmten Druckschwellenwertes auslösen (Artikel "Kontrollierte Druckentlastung", Industrieanzeiger 25.18, Seiten 52 und 53 sowie www.bsbsystems.de/Berstscheiben/explosionsschutz berstschei ben.html) .

DE 22 30 333 C3 beschreibt eine Metalldose für unter Druck stehende Flüssigkeiten oder Gase mit einem nach innen gewölbten Boden. In diesem Boden ist eine ringförmig um die Achse der Metalldose verlaufende Perforation eingebracht, bei der einzelne Einritzungen entlang der Kreisbahn mit Abstand angeordnet sind.

Ausgehend vom Stand der Technik ist es eine Aufgabe der vorliegenden Erfindung das Ausbilden einer Überdrucksollbruchstelle in einem Batteriedeckel für ein Batteriezellengehäuse effizient zu gestalten.

Diese Aufgabe wird durch ein Umformwerkzeug mit den Merkmalen des Patentanspruches 1 und ein Umformverfahren mit den Merkmalen des Patentanspruches 5 gelöst.

Das erfindungsgemäße Umformwerkzeug ist zur Herstellung einer Überdrucksollbruchstelle in einem Batteriedeckel für ein Batteriezellengehäuse eingerichtet. Es weist ein Matrizenwerkzeug sowie ein Stempelwerkzeug auf, die zusammenwirken, um die Überdrucksollbruchstelle in dem Batteriedeckel durch Umformen herzustellen.

Das Matrizenwerkzeug hat eine Auflagefläche und eine in der Auflagefläche vorhandene Umformvertiefung. Die Auflagefläche ist zum Auflegen des umzuformenden Batteriedeckels eingerichtet. Die Umformvertiefung erstreckt sich vollständig oder teilweise um eine Achse A. Vorzugsweise ist die Umformvertiefung in einer Umfangsrichtung um die Achse A vollständig geschlossen und mithin ringförmig ausgebildet. Die Umformvertiefung hat einen Vertiefungsgrund. In einer Axialrichtung parallel zur Achse betrachtet, definiert der Abstand zwischen der Auflagefläche und dem Vertiefungsgrund eine erste Tiefe.

An den Vertiefungsgrund schließt sich auf einer Innenseite eine Vertiefungsinnenflanke und auf der entgegengesetzten Außenseite eine Vertiefungsaußenflanke an. Die Vertiefungsinnenflanke ist näher an der Achse angeordnet als die Vertiefungsaußenflanke. Die Umformvertiefung hat vorzugsweise eine nutförmige Gestalt. Sie ist auf der dem Vertiefungsgrund entgegengesetzten Seite offen. Im Querschnitt kann die Umformvertiefung U-förmig sein, wobei die Vertiefungsinnenflanke und die Vertiefungsaußenflanke parallel zueinander verlaufen können. Alternativ ist es auch möglich, dass der Abstand zwischen der Vertiefungsinnenflanke und der Vertiefungsaußenflanke rechtwinklig zur Axialrichtung betrachtet mit zunehmendem Abstand von dem Vertiefungsgrund ebenfalls zunimmt. Die Breite der Umformvertiefung kann somit in Axialrichtung vom Vertiefungsgrund weg zunehmen.

Das Stempelwerkzeug hat an seiner dem Matrizenwerkzeug zugewandten Seite ein Stempelteil. Das Stempelteil ist vorzugsweise vollständig ringförmig geschlossen, wenn die Umformvertiefung ebenfalls vollständig ringförmig geschlossen ist. Ansonsten kann sich das Stempelteil analog zur Umformvertiefung nur teilweise um die Achse A herum erstrecken. Das Stempelteil erstreckt sich in Axialrichtung ausgehend von einer Stempelgrundfläche bis zu einem freien Ende. Das freie Ende ist dem Matrizenwerkzeug zugewandt. Der Abstand zwischen dem freien Ende des Stempelteils und der Stempelgrundfläche in Axialrichtung definiert eine zweite Tiefe. Die zweite Tiefe ist größer als die erste Tiefe. In Axialrichtung betrachtet ist das Stempelteil oberhalb des Vertiefungsgrundes positioniert. Beispielsweise können die Vertiefungsinnenflanke und die Vertiefungsau-ßenflanke einen hohlzylindrischen Raum um die Achse A definieren, wobei sich das Stempelteil innerhalb dieses hohlzylindrischen Raums befindet. Die äußere Mantelfläche dieses hohlzylindrischen Raums durchsetzt dabei die Vertiefungsau-ßenflanke und die innere Mantelfläche dieses hohlzylindrischen Raums durchsetzt dabei die Vertiefungsinnenflanke. Die beiden Mantelflächen sind parallel zueinander ausgerichtet.

Der Querschnitt des Stempelteils gibt die Querschnittsform einer in den Batteriedeckel einzuformenden Sicke der Überdrucksollbruchstelle vor.

Das Umformwerkzeug erlaubt beim Umformen des Batteriedeckels zwischen dem Stempelwerkzeug und dem Matrizenwerkzeug einen Materialfluss in die Umformvertiefung, dessen Volumen mindestens dem Volumen der eingeformten Sicke entspricht. Vorzugsweise ist das Volumen der Umformvertiefung größer als das Volumen der eingeformten Sicke. Unterhalb der Sicke verbleibt eine Wandstärke des Batteriedeckels, an der der Batteriedeckel bei Auftreten eines Druckschwellenwertes aufbrechen bzw. aufreißen kann. Durch den definierten Materialfluss beim Umformen des Batteriedeckels in die Umformvertiefung kann die Materialverfestigung gesteuert werden bzw. lässt sich ermitteln. Die Materialverfestigung beim Umformen beeinflusst zusätzlich zu der verbleibenden Wandstärke des Batteriedeckels an der Überdrucksollbruchstelle den Druckschwellenwert, an dem der Batteriedeckel aufreißt bzw. aufbricht. Das erfindungsgemäße Umformwerkzeug gestattet ein wiederholbares genaues Umformen des Batteriedeckels, um eine Überdrucksollbruchstelle im Batteriedeckel zu erhalten, die bei einem definierten Druckschwellenwert auslöst.

Der kürzeste Abstand zwischen der Vertiefungsinnenflanke und der Vertiefungsaußenflanke rechtwinklig zur Axialrichtung definiert eine erste Breite. Das gegenüber dem umgeformten Volumen der Sicke vorzugsweise größere Volumen der Umformvertiefung kann durch die entsprechend groß gewählte erste Breite erreicht werden.

Das Stempelteil weist eine sich zwischen dem freien Ende und der Stempelgrundfläche erstreckende Ringteilinnenfläche sowie eine sich zwischen dem freien Ende und der Stempelgrundfläche erstreckende Ringteilaußenfläche auf. Die Ringteilinnenfläche und die Ringteilaußenfläche sind rechtwinklig zur Axialrichtung mit Abstand zueinander angeordnet. Der maximale Abstand zwischen der Ringteilinnenfläche und der Ringteilaußenfläche definiert eine zweite Breite.

Die Ringteilinnenfläche und die Ringteilaußenfläche können parallel zueinander oder geneigt zueinander ausgerichtet sein. Ausgehend von dem freien Ende kann die Breite des Stempelteils mit zunehmendem Axialabstand in Axialrichtung ebenfalls zunehmen. Das Stempelteil kann somit ausgehend von dem freien Ende in Richtung zur Stempelgrundfläche eine zunehmende Breite aufweisen.

Die erste Breite ist zumindest um den Faktor 2 größer als die zweite Breite und insbesondere zumindest um den Faktor 3 oder 4 oder 5 größer als die zweite Breite.

Bei einer bevorzugten Ausführungsform weist das Umformwerkzeug zusätzlich zum Matrizenwerkzeug und dem Stempelwerkzeug eine Niederhalteranordnung mit wenigstens einem Niederhalter auf. Der wenigstens eine Niederhalter der Niederhalteranordnung liegt dem Matrizenwerkzeug gegenüber und ist benachbart zum Stempelwerkzeug angeordnet. Bei einem Ausführungsbeispiel kann ein innerer Niederhalter und ein äußerer Niederhalter vorhanden sein, wobei das Stempelwerkzeug rechtwinklig zur Axialrichtung zwischen dem inneren Niederhalter und dem äußeren Niederhalter angeordnet ist. Der innere Niederhalter kann somit in das ringförmige Stempelwerkzeug hineinragen. Der äußere Niederhalter kann das Stempelwerkzeug ringförmig umschließen. Der wenigstens eine Niederhalter kann in Axialrichtung federnd am Stempelwerkzeug gelagert sein, so dass der wenigstens eine Niederhalter über den Antrieb des Stempelwerkzeugs in Axialrichtung bewegt werden kann. Alternativ kann zumindest einer der vorhandenen Niederhalter, beispielsweise der innere Niederhalter unbeweglich angeordnet sein relativ zum Stempelwerkzeug, beispielsweise auch integral mit dem Stempelwerkzeug ausgebildet sein. Es ist auch möglich, den wenigstens einen Niederhalter über einen zusätzlichen Antrieb in Axialrichtung zu bewegen.

Insbesondere mittels des vorher beschriebenen Umformwerkzeugs kann ein Umformverfahren zur Herstellung der Überdrucksollbruchstelle in dem Batteriedeckel durchgeführt werden. Hierzu wird der Batteriedeckel zunächst auf der Auflagefläche des Matrizenwerkzeugs und somit zwischen dem Matrizenwerkzeug und dem Stempelwerkzeug angeordnet. Anschließend werden das Matrizenwerkzeug und/oder das Stempelwerkzeug in Axialrichtung aufeinander zubewegt, wobei das Stempelteil in den Batteriedeckel eingedrückt wird. Dabei fließt Material in die Umformvertiefung des Matrizenwerkzeugs und es entsteht eine nach oben offene Sicke im Batteriedeckel. Unterhalb der Sicke verbleibt ein Bereich des Batteriedeckels mit einer Wandstärke, die geringer ist als an anderen Stellen des Batteriedeckels und dadurch die Überdrucksollbruchstelle bildet.

Bei dem Umformverfahren kann vor oder gleichzeitig mit dem Eindrücken des Stempelwerkzeugs in den Batteriedeckel eine Klemmkraft zwischen einer Niederhalteranordnung und der Auflagefläche des Matrizenwerkzeugs erzeugt werden. Dadurch kann ein versehentliches unerwünschtes Verformen des Batteriedeckels beim Einformen der Sicke vermieden und der Materialfluss aus dem Bereich des Batteriedeckels, in den die Sicke eingeformt wird, in die Umformvertiefung unterstützt werden.

Bei einer bevorzugten Ausführungsform des Umformwerkzeugs ist der Vertiefungsgrund im Wesentlichen eben ausgebildet und kann sich insbesondere in einer Ebene erstrecken, die rechtwinklig zur Axialrichtung ausgerichtet ist. Alternativ dazu kann der Vertiefungsgrund der Umformvertiefung auch eine oder mehrere Erhebungen, insbesondere ringförmige Erhebungen aufweisen. Die ringförmigen Erhebungen können sich in Umfangsrichtung um die Achse erstrecken.

Nach dem Einformen der Sicke wird mittels eines Kerbwerkzeugs zusätzlich wenigstens eine Kerbe innerhalb der Sicke in den Batteriedeckel eingeformt. Die verbleibende Wandstärke im Bereich des Sickenbodens der Sicke kann direkt anschließend bzw. direkt unterhalb der Kerbe am geringsten sein. Durch das Einbringen wenigstens einer Kerbe nach dem Ausformen der Sicke kann die sich an die Kerbe anschließende verbleibende Wandstärke am Batteriedeckel sehr genau eingestellt werden. Dadurch kann der Druck, ab dem der Deckel bricht oder berstet sehr genau definiert werden, vorzugsweise mit einer Toleranz von höchstens 1-2 Bar.

Die Kerbe verjüngt sich bei einer bevorzugten Ausführungsform ausgehend von der Sicke in den Batteriedeckel hinein. Im Querschnitt kann die Kerbe eine V-förmige bzw. dreieckförmige Gestalt aufweisen.

Die wenigstens eine Kerbe ist in der Richtung, in der sich die Sicke im Batteriedeckel erstreckt, in Draufsicht auf die Oberseite des Batteriedeckels betrachtet, nicht vollständig geschlossen. Vorzugsweise erstreckt sich die wenigstens eine Kerbe lediglich entlang eines Abschnitts entlang der Sicke. Wenn mehrere Kerben vorhanden sind, sind diese mit Abstand zueinander angeordnet. Beispielsweise ist es möglich, zumindest in einem Bereich der Sicke, in dem die Sicke in Draufsicht auf die Oberseite des Batteriedeckels betrachtet gekrümmt verläuft, eine Kerbe vorzusehen. Es ist auch möglich, in allen Bereichen, in denen die Sicke in Draufsicht auf die Oberseite des Batteriedeckels betrachtet gekrümmt verläuft, eine Kerbe vorzusehen. Mehreren gekrümmt verlaufenden Abschnitten der Sicke kann dabei auch eine gemeinsame Kerbe zugeordnet sein.

Die Kerbe ist vorzugsweise an einer Stelle innerhalb der Sicke angeordnet, an der der Sickenboden durch einen Radius oder eine Krümmung in eine Sickenflanke übergeht. Insbesondere ist die Kerbe in dem Übergangsbereich zwischen Sickenboden und Sickenflanke vorhanden, der näher an der Achse und somit sozusagen innen in der Sicke angeordnet ist. Die Kerbe kann auch in dem Übergangsbereich zwischen Sickenboden und Sickenflanke vorhanden, der weiter von der Achse weg und somit sozusagen außen in der Sicke angeordnet ist.

Vorteilhafte Ausgestaltungen der Erfindung ergeben sich aus den abhängigen Patentansprüchen, der Beschreibung sowie den Zeichnungen. Nachfolgend werden Ausführungsbeispiele der Erfindung anhand der beigefügten Zeichnungen im Einzelnen erläutert. Es zeigen:
Figur 1 eine schematische Draufsicht auf eine Unterseite eines Ausführungsbeispiels eines Batteriedeckels,
Figur 2 eine schematische Draufsicht auf eine der Unterseite entgegengesetzten Oberseite des Batteriedeckels aus Figur 1,
Figur 3 eine perspektivische geschnittene Teildarstellung des Batteriedeckels aus den Figuren 1 und 2 gemäß der Schnittlinie III-III in Figur 2,
Figur 4 eine Detaildarstellung des Bereichs IV des Batteriedeckels aus Figur 3 im Querschnitt,
Figur 5 eine schematische Draufsicht auf ein Ausführungsbeispiel eines Stempelwerkzeugs sowie ein Ausführungsbeispiel einer Niederhalteranordnung in einer Axialrichtung,
Figur 6 eine schematische geschnittene Teildarstellung des Stempelwerkzeugs sowie der Niederhalteranordnung aus Figur 4 entlang einer Ebene parallel zur Axialrichtung gemäß der Schnittlinie V-V in Figur 4 sowie eine schematische geschnittene Darstellung eines Matrizenwerkzeugs des Umformwerkzeugs,
Figur 7 das Umformwerkzeug entsprechend den Ausführungsbeispielen aus den Figuren 4 und 5 in einer perspektivischen geschnittenen Teildarstellung,
Figur 8 eine schematisierte Schnittdarstellung eines mit einer Sicke versehenen Batteriedeckels sowie eines Kerbwerkzeugs zum Einformen einer Kerbe in die Sicke des Batteriedeckels,
Figur 9 eine schematische Teildarstellung des Batteriedeckels im Bereich IX in Figur 8 mit einer in die Sicke eingebrachten Kerbe in einem Schnittbild,
Figur 10 eine schematische Draufsicht auf die Sicke bei einem Ausführungsbeispiel des Batteriedeckels, bei dem zwei Kerben im Bereich der Sicke eingeformt wurden,
Figur 11 eine schematische Seitenansicht eines Ausführungsbeispiels eines Kerbwerkzeugs und
Figur 12 eine perspektivische Schnittdarstellung durch das Kerbwerkzeug aus Figur 11 gemäß der Schnittlinie XII-XII.

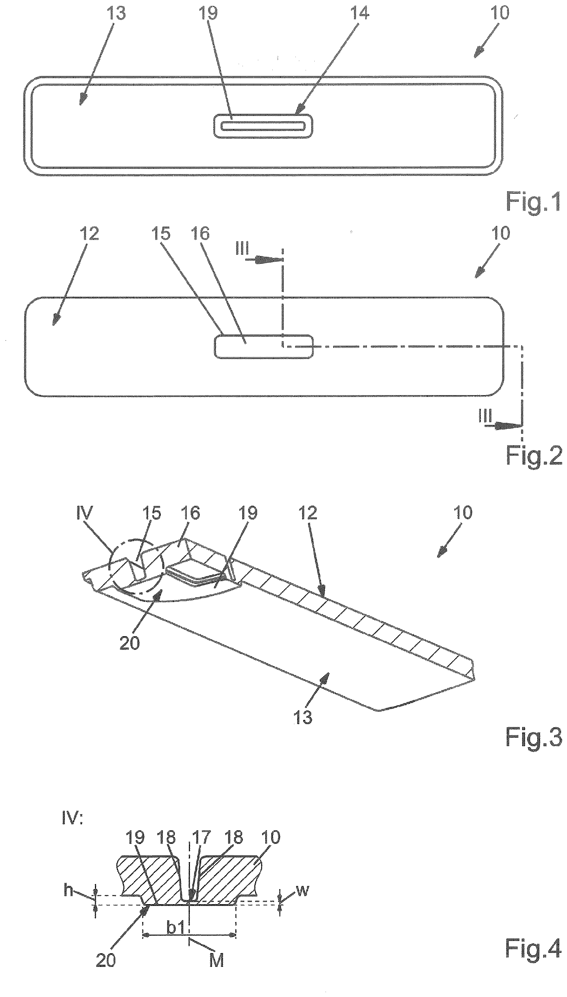

In den Figuren 1-3 ist ein Ausführungsbeispiel eines Batteriedeckels 10 veranschaulicht. Der Batteriedeckel 10 dient zum Verschließen einer Öffnung eines Batteriezellengehäuses, beispielsgemäß eines prismatischen Batteriezellengehäuses. Bei dem veranschaulichten Ausführungsbeispiel hat der Batteriedeckel 10 eine im Wesentlichen rechteckige Kontur, wobei die Eckbereiche mit einem Radius abgerundet sind. In der Gebrauchslage des Batteriezellengehäuses kann der Batteriedeckel 10 in einer beliebigen Lage und Orientierung angeordnet sein. Er kann eine Öffnung im Batteriezellengehäuse verschließen, die oben oder unten oder an der Seite angeordnet ist.

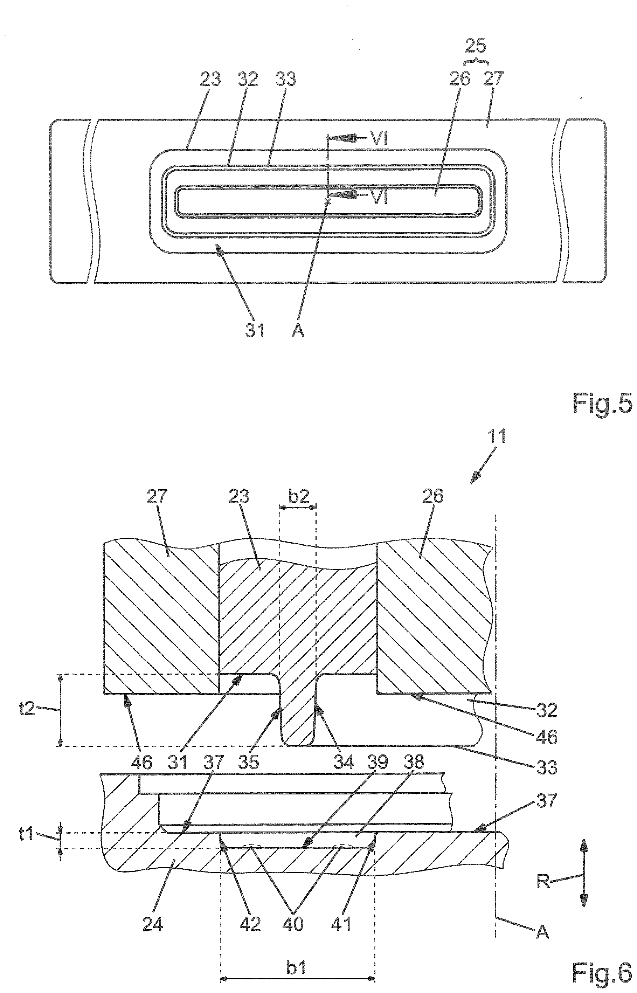

Der Batteriedeckel 10 gemäß den Figuren 1-4 wurde mit Hilfe einer Umformvorrichtung 11 (Figuren 5 und 6) durch ein Umformverfahren umgeformt. Der Batteriedeckel 10 hat eine Oberseite 12 (Fig. 2) und eine der Oberseite 12 entgegengesetzte Unterseite 13 (Fig. 1). Mittels des Umformwerkzeugs 11 bzw. des Umformverfahrens gemäß der vorliegenden Erfindung ist an einer Stelle in den Batteriedeckel 10 eine Überdrucksollbruchstelle 14 durch Umformen hergestellt. An der Überdrucksollbruchstelle 14 weist der Batteriedeckel 10 eine gegenüber der sonstigen Wandstärke reduzierte minimale Wandstärke w auf. Hierzu ist eine zur Oberseite 12 des Batteriedeckels 10 hin offene nutförmige Sicke 15 in den Batteriedeckel 10 durch ein Umformverfahren eingebracht. Die Sicke 15 ist beim Ausführungsbeispiel im Zentrum der Oberseite 12 des Batteriedeckels 10 angeordnet, könnte sich alternativ auch an einer beliebigen anderen Stelle befinden. Die Sicke 15 ist vorzugsweise nach Art eines Rings vollständig geschlossen und umgibt einen zentralen Bereich 16. Die Sicke 15 hat einen Sickenboden 17 und zwei sich gegenüberliegende Sickenflanken 18. Die Sickenflanken 18 sind beim Ausführungsbeispiel nicht parallel zueinander angeordnet, sondern relativ zu einer Mittelebene M, die mittig durch den Querschnitt der Sicke verläuft geneigt, beispielsweise um etwa 3 Grad (Fig. 4). Dadurch erweitert sich die Sicke 15 zur Oberseite 12 hin. Rechtwinklig zur Mittelebene M hat die Sicke 15 eine Breite, die am Sickenboden 17 am kleinsten ist. Die Breite am Sickenboden 17 beträgt etwa 1 mm.

Die minimale Wandstärke w des Batteriedeckels 10 unterhalb des Sickenbodens 17 ist beispielsgemäß kleiner als 0,5 mm und kann etwa 0,2 mm betragen.

An der Unterseite 13 hat der Batteriedeckel 10 eine Ausformung 19. Die Ausformung 19 hat in Umfangsrichtung um die Achse A einen der Sicke 15 entsprechenden Verlauf und ist beispielsgemäß ringförmig geschlossen. Rechtwinklig zur Mittelebene M hat die Ausformung 19 eine Breite, die größer ist als die Breite der Sicke 15 und beispielsgemäß um den Faktor 3 oder 4 oder 5 größer als die Breite der Sicke 15 am Sickenboden 17. Beim Ausführungsbeispiel hat die Ausformung 19 eine Breite von etwa 5 mm. Sie ist symmetrisch zur Mittelebene M ausgebildet. Parallel zur Mittelebene M und rechtwinklig zur Unterseite 13 gesehen, hat die Ausformung 19 eine Höhe h gegenüber dem angrenzenden Bereich der Unterseite 13, die größer ist als die minimale Wandstärke w des Batteriedeckels 10, so dass sich die Sicke 15 im Bereich des Sickenbodens 17 in die Ausformung 19 hinein erstreckt. Die Höhe der Ausformung 19 kann beispielsweise mindestens doppelt so groß sein, wie die minimale Wandstärke w des Batteriedeckels und beträgt beim Ausführungsbeispiel 0,5 mm. Außerhalb der Ausformung 19 beträgt die Wandstärke des Batteriedeckels, also der kürzeste Abstand zwischen der Oberseite 12 und der Unterseite 13 etwa 2 mm. Die Ausformung hat einen Flächenabschnitt 20, der sich um die Höhe h versetzt parallel zur übrigen Unterseite 13 des Batteriedeckels 10 erstreckt,

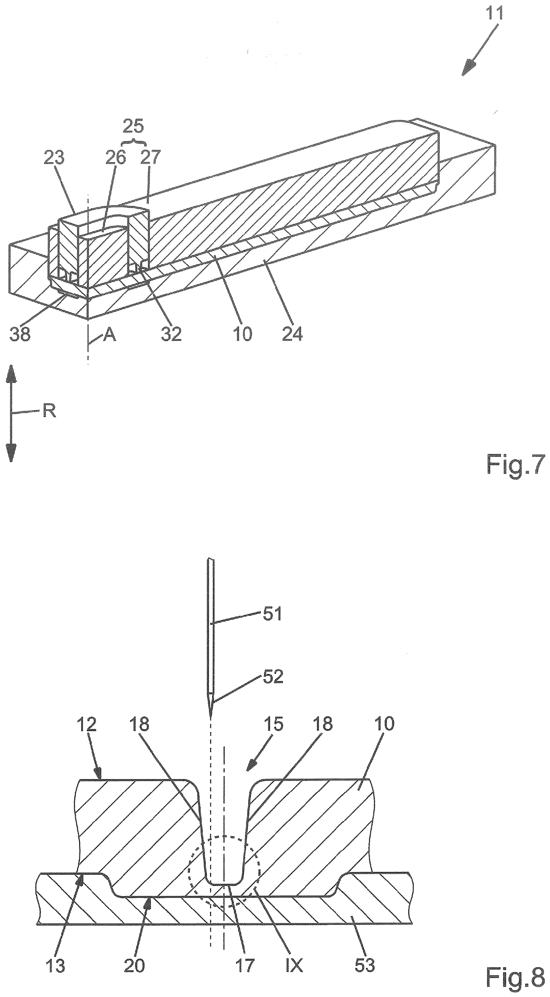

In den Figuren 5-7 ist das Umformwerkzeug 11 bzw. Teile davon veranschaulicht, mittels dem der in den Figuren 1-4 veranschaulichte und vorstehend erläuterte Batteriedeckel umgeformt werden kann, um die Überdrucksollbruchstelle 14 zu bilden. Das Umformwerkzeug 11 hat hierfür ein Stempelwerkzeug 23, ein Matrizenwerkzeug 24 sowie beim Ausführungsbeispiel eine Niederhalteranordnung 25 mit einem inneren Niederhalter 26 und einem äußeren Niederhalter 27. Der Batteriedeckel 10 kann zwischen das Stempelwerkzeug 23 und das Matrizenwerkzeug 24 eingelegt werden, wie es schematisch in Figur 7 veranschaulicht ist. Durch Zusammenwirken des Stempelwerkzeugs 23 und des Matrizenwerkzeugs 24 kann der Batteriedeckel 10 umgeformt werden, um die Überdrucksollbruchstelle 14 zu bilden.

Beispielsgemäß findet bei der Ausbildung der Überdrucksollbruchstelle 14 kein spanendes oder materialabtragendes Bearbeiten des Batteriedeckels 10 statt. Die Überdrucksollbruchstelle 14 wird ausschließlich durch Umformung erzeugt.

Das Stempelwerkzeug 23 hat an seiner dem Matrizenwerkzeug 24 zu gewandten Seite eine Stempelgrundfläche 31, die beim Ausführungsbeispiel in einer Ebene angeordnet ist, die rechtwinklig zu einer Achse A verläuft. Die Richtung parallel zur Achse A wird als Axialrichtung R bezeichnet. Beim Umformen wird das Stempelwerkzeug 23 und das Matrizenwerkzeug 24 in Axialrichtung R aufeinander zubewegt, um den dazwischen angeordneten Batteriedeckel 10 umzuformen. Das Umformwerkzeug 11 kann beispielsweise als Pressenwerkzeug in einer Presse verwendet werden. Beispielsweise kann das Matrizenwerkzeug 24 gegenüber dem Pressengestellt der Presse unbeweglich angeordnet werden, während das Stempelwerkzeug 23 und beim Ausführungsbeispiel die Niederhalteranordnung 25 relativ zum Matrizenwerkzeug 24 in Axialrichtung R bewegbar sind, wofür die Presse wenigstens einen uns beispielsgemäß genau einen Antrieb aufweist. Beispielsgemäß sind der innere Niederhalter 26 und der äußere Niederhalter 27 in Axialrichtung R beweglich am Stempelwerkzeug 23 gelagert und können sich über jeweils eine Federeinrichtung am Stempelwerkzeug 23 abstützen. Die Federeinrichtung bestimmt die Niederhaltekraft, mit der der innere Niederhalter 26 und der äußere Niederhalter 27 den Batteriedeckel 10 beim Umformen mit dem Stempelwerkzeug 23 beaufschlagen.

Das Stempelwerkzeug 23 ist beim Ausführungsbeispiel ringförmig geschlossen ausgebildet und umschließt die Achse A. Die Achse A verläuft durch den geometrischen Mittelpunkt des Stempelwerkzeugs 23.

Von der Stempelgrundfläche 31 weg erstreckt sich in Axialrichtung R ein Stempelteil 32 zu einem freien Ende 33 hin. Das Stempelteil 32 ist beim Ausführungsbeispiel als ein um die Achse A vollständig geschlossener Ring ausgebildet. Bei einem alternativen, nicht veranschaulichten Ausführungsbeispiel könnte das Stempelteil 32 auch einen oder mehrere sich nur in einem Umfangswinkelbereich um die Achse A erstreckende Stempelteilabschnitte aufweisen. Bei einer solchen Ausgestaltung des Stempelteils 32 kann beispielsweise eine Sicke 15 in dem Batteriedeckel 10 ausgebildet werden, die sich nicht vollständig geschlossen um den zentralen Bereich 16 herum erstreckt, sondern eine oder mehrere Unterbrechungen aufweist, in denen die Wandstärke des Batteriedeckels größer ist als die minimale Wandstärke w.

Das Matrizenwerkzeug 24 hat eine Auflagefläche 37 zum Auflegen des umzuformenden Batteriedeckels 10. Die Auflagefläche 37 erstreckt sich zumindest abschnittsweise rechtwinklig zur Axialrichtung R. Die Form der Auflagefläche 37 hängt von der Querschnittsform des herzustellenden Batteriedeckels 10 ab. Beim Ausführungsbeispiel hat die Auflagefläche 37 zumindest einen Abschnitt, der rechtwinklig zur Axialrichtung R ausgerichtet und in dem eine Umformvertiefung 38 vorhanden ist. Die Umformvertiefung 38 ist nutähnlich ausgebildet und hat in Umfangsrichtung um die Achse A einen Verlauf, der dem Verlauf in Umfangsrichtung um die Achse A des Stempelteils 32 entspricht. Beim Ausführungsbeispiel ist die Umformvertiefung 38 um die Achse A ringförmig geschlossen.

Der Verlauf der Umformvertiefung 38 sowie des Stempelteils 32 kann abschnittsweise gerade und/oder abschnittsweise gekrümmt sein. Bei dem hier veranschaulichten Ausführungsbeispiel des Umformwerkzeugs 11 ist der Verlauf um die Achse A rechteckförmig mit abgerundeten Eckbereichen, wie es beispielhaft für das Stempelteil 32 in Figur 5 veranschaulicht ist.

Die Umformvertiefung 38 ist zum Stempelwerkzeug 23 hin offen und hat einen dem Stempelteil 32 in Axialrichtung R gegenüberliegenden Vertiefungsgrund 39. Der Vertiefungsgrund 39 ist beispielsgemäß eben ausgebildet und erstreckt sich in einer Ebene, rechtwinklig zur Axialrichtung R. In Abwandlung hierzu könnte der Vertiefungsgrund 39 auch eine oder mehrere Erhebungen und/oder Senken aufweisen. In Figur 6 sind gestrichelt schematisch zwei Erhebungen 40 veranschaulicht, die einen alternativen Verlauf des Vertiefungsgrunds 39 darstellen.

An den Vertiefungsgrund 39 schließt sich rechtwinklig zur Axialrichtung R auf der einen Seite eine Vertiefungsinnenflanke 41 und auf der entgegengesetzten Seite eine Vertiefungsaußenflanke 42 an. Die Vertiefungsinnenflanke 41 und die Vertiefungsaußenflanke 42 verbinden den Vertiefungsgrund 39 mit dem jeweils benachbarten Rand der Auflagefläche 37. Rechtwinklig zur Axialrichtung R definiert der kürzeste Abstand zwischen der Vertiefungsinnenflanke 41 und der Vertiefungsaußenflanke 42 eine erste Breite b1. In Axialrichtung R definiert der Abstand und insbesondere der maximale Abstand zwischen der Auflagefläche 37 und dem Vertiefungsgrund 39 eine erste Tiefe t1.

Der Abstand zwischen der Stempelgrundfläche 31 und dem freien Ende 33 des Stempelteils 32 in Axialrichtung R definiert eine zweite Tiefe t2. Die zweite Tiefe t2 ist größer als die erste Tiefe t1. Die zweite Tiefe t2 ist beim Ausführungsbeispiel mindestens dreimal größer oder mindestens viermal größer als die erste Tiefe t1. Beispielsgemäß beträgt die zweite Tiefe t2 etwa 2,3 mm und die erste Tiefe t1 beträgt beispielsweise etwa 0,5 mm.

Das Stempelteil 32 hat eine die Achse A in Umfangsrichtung umschließende Ringteilinnenfläche 34 sowie eine die Achse A in Umfangsrichtung umschließende Ringteilaußenfläche 35. Die Ringteilinnenfläche 34 und die Ringteilaußenfläche 35 sind rechtwinklig zur Axialrichtung R mit Abstand zueinander angeordnet und verbinden jeweils die Stempelgrundfläche 31 mit dem freien Ende 33 des Stempelteils 32. Der maximale Abstand zwischen der Ringteilinnenfläche 34 und der Ringteilaußenfläche 35 definiert eine zweite Breite b2. Die zweite Breite b2 ist kleiner als die erste Breite b1. Beispielsgemäß ist die erste Breite b1 mindestens dreimal oder mindestens viermal oder mindestens fünfmal größer als die zweite Breite b2. Bei einem Ausführungsbeispiel beträgt die erste Breite b1 etwa 5 mm und die zweite Breite b2 1 mm bis 1,2 mm.

Die Niederhalteranordnung 25 ist dazu ausgebildet, vor und/oder während dem Umformen des Batteriedeckels 10 eine Klemmkraft zu erzeugen, die den Batteriedeckel 10 zwischen der Niederhalteranordnung 25 und dem Matrizenwerkzeug 24 einklemmt. Die Niederhalteranordnung 25 kann hierzu unabhängig vom Stempelwerkzeug 23 angetrieben werden. Der innere Niederhalter 26 wird vom ringförmigen Stempelwerkzeug 23 in einer Umfangsrichtung um die Achse A umschlossen. Der äußere Niederhalter 27 wiederum umschließt das ringförmige Stempelwerkzeug 23 in Umfangsrichtung um die Achse A vollständig. In Figur 7 ist perspektivisch ein Viertel des Umformwerkzeugs 11 veranschaulicht. Die Verbindungskante zwischen den beiden Schnittebenen in Figur 7 erstreckt sich entlang der Achse A.

Die dem Matrizenwerkzeug 24 zugewandte Klemmfläche 46 der Niederhalteranordnung 25, die abschnittsweise am inneren Niederhalter 26 und am äußeren Niederhalter 27 vorhanden ist, erstreckt sich beim Ausführungsbeispiel in einer Ebene, die rechtwinklig zur Axialrichtung R ausgerichtet ist. Die Ausbildung der Klemmfläche 46 ist an die Form der Oberseite 12 des umzuformenden Batteriedeckels 10 angepasst und kann auch eine abweichende Gestalt aufweisen.

Mittels des Umformwerkzeugs 11 wird der Batteriedeckel 10 durch ein Umformverfahren umgeformt, das wie folgt abläuft:
Zunächst wird der umzuformende Batteriedeckel 10 auf dem Matrizenwerkzeug 24 angeordnet. Die Unterseite 13 des Batteriedeckels 10 liegt dabei auf der Auflagefläche 37 des Matrizenwerkzeugs 24 auf. Die Umformvertiefung 38 ist vollständig oder zumindest im Wesentlichen frei. In seinem umverformten Zustand greift der Batteriedeckel 10 beispielsgemäß nicht in die Umformvertiefung 38 des Matrizenwerkzeugs 24 ein.

Mittels der Niederhalteranordnung 25 wird der umzuformende Batteriedeckel 10 anschließend zwischen der Klemmfläche 46 und dem Matrizenwerkzeug 24 eingeklemmt und während des Umformvorgangs mit einer definierten Klemmkraft beaufschlagt. Dadurch kann der Materialfluss beim Umformen definiert und unerwünschte Umformungen des Batteriedeckels 10 vermieden werden. Zum Umformen des Batteriedeckels 10 wird das Stempelteil 32 des Stempelwerkzeugs gegen die Oberseite 12 gedrückt und in den Batteriedeckel 10 eingedrückt, so dass eine der Gestalt des Stempelteils 32 entsprechende Sicke 15 im Batteriedeckel 10 durch Umformen entsteht. Das dabei verdrängte Material des Batteriedeckels 10 fließt in die Umformvertiefung 38 des Matrizenwerkzeugs. Durch den Umformvorgang wird somit die Sicke 15 eingeformt und die Ausformung 19 an der Unterseite 13 des Batteriedeckels 10 ausgeformt. Die Gestalt der Ausformung 19 entspricht der Gestalt der Umformvertiefung 38 im Matrizenwerkzeug 24.

Das Stempelwerkzeug 23 wird beim Umformen des Batteriedeckels 10 dem Matrizenwerkzeug 24 soweit angenähert, dass zwischen dem freien Ende 33 und der Umformvertiefung 38 eine Distanz verbleibt, die der minimalen Wandstärke w des Batteriedeckels benachbart zum Sickenboden 17 entspricht. Auf diese Weise wird die Überdrucksollbruchstelle 14 am Batteriedeckel 10 gebildet.

Nach dem Einbringen der Sicke 15 in den Batteriedeckel 10 wird in einem weiteren Verfahrensschritt wenigstens eine Kerbe 50 im Bereich der Sicke 15 in den Batteriedeckel 10 eingeformt. Die wenigstens eine Kerbe 50 wird mit Hilfe eines Kerbwerkzeugs 51 eingeformt. Das Kerbwerkzeug 51 hat für jede einzuformende Kerbe 50 jeweils einen Werkzeugteil 52. Im Querschnitt verjüngt sich der Werkzeugteil 52 zu seinem freien Ende hin, beispielsweise V-förmig, dreieckförmig, keilförmig oder dergleichen. Die Flanken dieses Werkzeugteils 52 können im Querschnitt betrachtet geradlinig oder gekrümmt verlaufen.

Zum Einformen der wenigstens einen Kerbe 50 wird das Kerbwerkzeug 51 von der offenen Seite her in die Sicke 15 eingeführt und in einem Übergangsbereich zwischen dem Sickenboden 17 und einer benachbarten Sickenflanke 18 gegen den Batteriedeckel 10 gedrückt, so dass Material verdrängt wird und die wenigstens eine Kerbe 50 entsteht. Das Material kann dabei benachbart zu der wenigstens einen Kerbe 50 in die Sicke 15 verdrängt werden. Beim Einformen der wenigstens einen Kerbe 50 liegt der Batteriedeckel 10 vorzugsweise auf einer Auflage 53 auf, so dass die Unterseite des Batteriedeckels 13 beim Einformen der wenigstens einen Kerbe 50 unverformt bleibt. Die Auflage 53 kann dabei an die Kontur der Unterseite 13 des zuvor bereits umgeformten Batteriedeckels 10 angepasst sein (Figur 8).

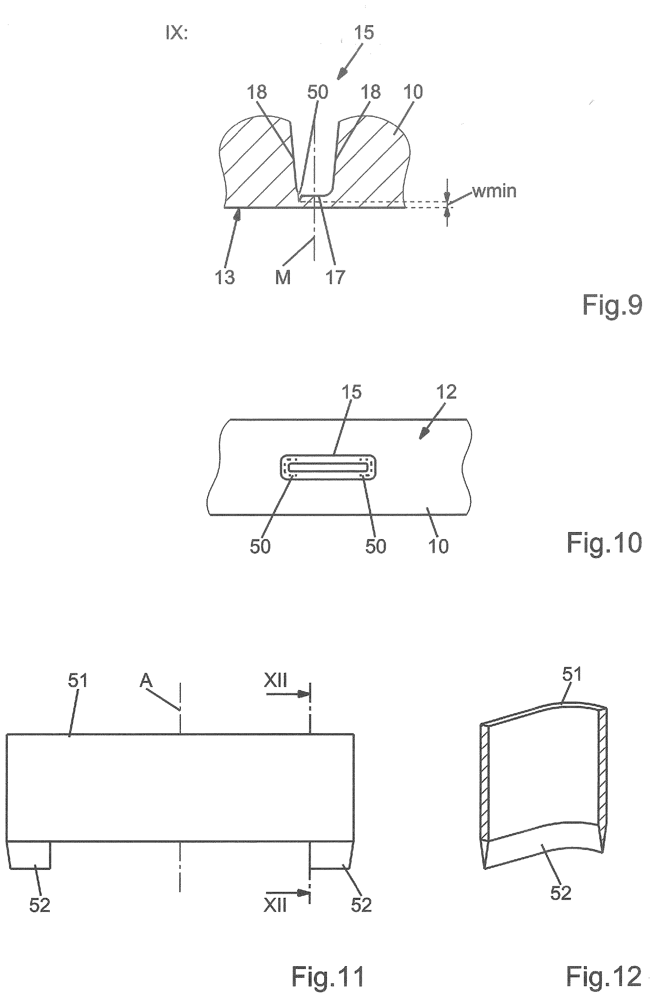

Die mittels des Kerbwerkzeugs 51 in den Batteriedeckel 10 innerhalb der Sicke 15 eingebrachte wenigstens eine Kerbe 50 ist stark schematisiert im Querschnitt in Figur 9 dargestellt, wobei die Figur 9 den Bereich IX aus Figur 8 vergrößert zeigt. Die Kerbe 50 ist vorzugsweise außerhalb der Mittelebene M angeordnet. Die wenigstens eine Kerbe 50 ist insbesondere in einem Bereich der Sicke 15 in den Batteriedeckel 10 eingeformt, in dem sich die Innenfläche der Sicke 15 krümmt, beispielsweise im Übergangsbereich zwischen dem Sickenboden 17 und einer benachbarten Sickenflanke 18. Dort treten bei Überdruck im Batteriezellengehäuse hohe Spannungen auf, so dass das Bersten des Batteriedeckels 10 auf einen Überdruckgrenzwert sehr genau definiert eingestellt werden kann.

Aus Figur 9 ergibt sich außerdem, dass die verbleibende Wandstärke direkt unterhalb der Sicke 50 einer minimalen Wandstärke wmin entspricht. Die minimale Wandstärke wmin ist der kürzeste Abstand zwischen der Unterseite 13 des Batteriedeckels 10 und der wenigstens einen Kerbe 50.

Entsprechend der Form des wenigstens einen Werkzeugteils 52 hat die Kerbe 50 beispielsweise eine dreieckförmige oder keilförmige Gestalt. Sie kann sich ausgehend vom Inneren der Sicke 15 zur Unterseite des Batteriedeckels 13 hin verjüngen.

Die minimale Wandstärke wmin kann sehr genau den Berstdruck für das Batteriezellengehäuse vorgeben. Gegenüber dem Einformen der Sicke 15 wird beim Einformen der wenigstens einen Kerbe 50 viel weniger Material des Batteriedeckels 10 verdrängt, insbesondere höchsten 10 % oder höchsten 5 % oder höchsten 2 % des Materialvolumens, das beim Einformen der Sicke 15 verdrängt wird. Dadurch sind elastische Verspannungen bzw. Verformungen im Kerbwerkzeug 51 und dem Batteriedeckel 10 beim Einformen der wenigstens einen Kerbe 50 sehr klein und die vorgegebene minimale Wandstärke wmin kann sehr exakt erreicht werden. Dadurch lässt sich der vorgegebene Berstdruck des Batteriezellengehäuses bzw. des Batteriedeckels 10 sehr genau einstellen. Demgegenüber kann die Wandstärke w unterhalb des Sickenbodens 17 nach dem ersten Verfahrensschritt (Einformen der Sicke) durch die Elastizitäten in der Umformvorrichtung 11 sowie des Batteriedeckels 10 gewissen Schwankungen unterworfen sein, so dass sich der Berstdruck bei entsprechend klein vorgegebenen Toleranzbereichen für den Berstdruck nicht genau genug einstellen lässt. Eine solche genauere Einstellung kann durch das zweistufige Verfahren erreicht werden, bei dem zunächst die Sicke 15 eingeformt und anschließend die wenigstens eine Kerbe 50 innerhalb der Sicke 15 eingebracht wird.

Die wenigstens eine Kerbe 50 ist in Umfangsrichtung bzw. Erstreckungsrichtung der Sicke 15 - in Draufsicht auf die Oberseite 12 des Batteriedeckels 10 - nicht vollständig ringförmig geschlossen. Demgegenüber ist beim Ausführungsbeispiel die Sicke 15 vollständig ringförmig bzw. ringähnlich geschlossen ausgebildet (Figuren 2 und 10). In Figur 10 ist veranschaulicht, dass bei einem Ausführungsbeispiel zumindest in den Bereichen, in denen die Sicke 15 um den zentralen Bereich 16 herum in einer Draufsicht auf die Oberseite 12 des Batteriedeckels 10 gekrümmt verläuft, eine Kerbe 50 vorhanden ist (Kerben 50 sind gestrichelt dargestellt). Einem derart gekrümmt verlaufenden Bereich der Sicke 15 kann jeweils eine Kerbe 50 zugeordnet sein. Es ist auch möglich, mehreren derart gekrümmt verlaufenden Abschnitten der Sicke 15 eine gemeinsame Kerbe 50 zuzuordnen, wie es beispielsweise in Figur 10 veranschaulicht ist. Dort sind zwei Kerben 50 vorhanden, die jeweils zwei gekrümmten Abschnitten der Sicke 15 zugeordnet sind.

Es versteht sich, dass in Abwandlung zu dem beschriebenen und veranschaulichten Ausführungsbeispiel, die Anzahl der Kerben 50 auch größer oder kleiner sein kann.

Wie in Figur 10 schematisch veranschaulicht, werden bei dem hier dargestellten Ausführungsbeispiel des Batteriedeckels 10 zwei U-förmige Kerben 50 in die Sicke 15 eingeformt. Dementsprechend kann ein Kerbwerkzeug 51 zwei U-förmige Werkzeugteile 52 aufweisen, wie es in den Figuren 11 und 12 schematisch gezeigt ist. Die Ausgestaltung der Werkzeugteile 52 des Kerbwerkzeugs 51 hängt von der Anzahl und dem Verlauf der einzuformenden Kerben 50 ab und kann bei anderen Ausführungen auch anders ausgestaltet sein.

Die Erfindung betrifft ein Umformwerkzeug 11 und ein Umformverfahren zur Herstellung einer Überdrucksollbruchstelle 14 in einem Batteriedeckel 10, wobei die Überdrucksollbruchstelle 14 insbesondere ausschließlich durch Umformen erzeugt wird. Das Umformwerkzeug 11 hat ein Stempelwerkzeug 23, ein Matrizenwerkzeug 24 und optional eine Niederhalteranordnung 25. Am Matrizenwerkzeug 24 ist eine Auflagefläche 37 für den umzuformenden Batteriedeckel 10 vorhanden, gegenüber der eine Umformvertiefung 38 vertieft im Matrizenwerkzeug 24 ausgebildet ist. Am Stempelwerkzeug 23 ist ein Stempelteil 32 und beispielsgemäß ein ringförmiges Stempelteil vorhanden, das im Querschnitt einer herzustellenden Sicke 15 im Batteriedeckel 10 entspricht. Beim Umformen des Batteriedeckels 10 wird das Stempelteil 32 in den Batteriedeckel 10 gedrückt, wodurch Material des Batteriedeckels 10 in die Umformvertiefung 38 fließt. Dabei wird das Stempelteil 32 der Umformvertiefung 38 derart angenähert, dass die verbleibende Distanz einer minimalen Wandstärke w an der Überdrucksollbruchstelle 14 entspricht.

### Bezugszeichenliste:

- 10: Batteriedeckel
- 11: Umformvorrichtung
- 12: Oberseite des Batteriedeckels
- 13: Unterseite des Batteriedeckels
- 14: Überdrucksollbruchstelle
- 15: Sicke
- 16: zentralen Bereich
- 17: Sickenboden
- 18: Sickenflanken
- 19: Ausformung
- 20: Flächenabschnitt der Ausformung
- 23: Stempelwerkzeug
- 24: Matrizenwerkzeug
- 25: Niederhalteranordnung
- 26: inneren Niederhalter
- 27: äußeren Niederhalter
- 31: Stempelgrundfläche
- 32: Stempelteil
- 33: freies Ende
- 34: Ringteilinnenfläche
- 35: Ringteilaußenfläche

- 37: Auflagefläche
- 38: Umformvertiefung
- 39: Vertiefungsgrund
- 40: Erhebung
- 41: Vertiefungsinnenflanke
- 42: Vertiefungsaußenflanke
- 46: Klemmfläche

- 50: Kerbe
- 51: Kerbwerkzeug
- 52: Werkzeugteil
- 53: Auflage

- A: Achse
- b1: erste Breite
- b2: zweite Breite
- h: Höhe der Ausformung
- M: Mittelebene
- R: Axialrichtung
- t1: erste Tiefe
- t2: zweite Tiefe
- w: minimale Wandstärke

## Patentansprüche

1. Umformwerkzeug (11) zur Herstellung einer Überdrucksollbruchstelle (14) in einem Batteriedeckel (10) für ein Batteriezellengehäuse,
mit einem Matrizenwerkzeug (24), das in einer Auflagefläche (37) eine Umformvertiefung (38) aufweist, die sich um eine Achse (A) erstreckt, und die einen Vertiefungsgrund (39) aufweist, wobei der Abstand zwischen der Auflagefläche (37) und dem Vertiefungsgrund (39) in einer Axialrichtung (R) parallel zur Achse (A) eine erste Tiefe (t1) definiert,
wobei sich an den Vertiefungsgrund (39) rechtwinkelig zur Axialrichtung (R) auf einer Innenseite der Umformvertiefung (38) eine Vertiefungsinnenflanke (41) und auf einer der Innenseite entgegengesetzten Außenseite der Umformvertiefung (38) eine Vertiefungsaußenflanke (42) anschließt, wobei der kürzeste Abstand zwischen der Vertiefungsinnenflanke (41) und der Vertiefungsau-ßenflanke (42) rechtwinkelig zur Axialrichtung (R) eine erste Breite (b1) definiert,
mit einem Stempelwerkzeug (23), das an seiner dem Matrizenwerkzeug (24) zugewandten Seite ein Stempelteil (32) aufweist, das sich in Axialrichtung (R) ausgehend von einer Stempelgrundfläche (31) bis zu einem freien Ende (33) erstreckt, wobei der Abstand zwischen dem freien Ende (33) des Stempelteils (32) und der Stempelgrundfläche (31) eine zweite Tiefe (t2) definiert, wobei das Stempelteil (32) in Axialrichtung (R) oberhalb des Vertiefungsgrundes (39) positioniert ist und im Querschnitt einer im Batteriedeckel (10) einzuformenden Sicke (15) der Überdrucksollbruchstelle (14) entspricht,
wobei das Stempelteil (32) eine sich zwischen dem freie Ende (33) und der Stempelgrundfläche (31) erstreckende Ringteilinnenfläche (34) und eine sich zwischen dem freie Ende (33) und der Stempelgrundfläche (31) erstreckende Ringteilaußenfläche (35) aufweist, die rechtwinkelig zur Axialrichtung (R) mit Abstand zueinander angeordnet sind, wobei der Abstand zwischen der Ringteilinnenfläche (34) und der Ringteilaußenfläche (35) eine zweite Breite (b2) definiert, **dadurch gekennzeichnet, dass**
die zweite Tiefe (t2) größer als die erste Tiefe (t1) ist, dass die erste Breite (b1) mindestens um den Faktor 2 größer ist als die zweite Breite (b2),
und, dass das Umformwerkzeug ein Kerbwerkzeug (51) enthält, das dazu eingerichtet ist, innerhalb der Sicke (15) wenigstens eine Kerbe (50) einzuformen.

2. Umformwerkzeug nach Anspruch 1,
**dadurch gekennzeichnet, dass** die erste Breite (b1) mindestens um den Faktor 3 oder 4 größer ist als die zweite Breite (b2).

3. Umformwerkzeug nach einem der vorhergehenden Ansprüche, **dadurch gekennzeichnet, dass** eine dem Matrizenwerkzeug (24) gegenüberliegend und benachbart zum Stempelwerkzeug (23) angeordnete Niederhalteranordnung (25) vorhanden ist.

4. Umformwerkzeug nach Anspruch 3,
**dadurch gekennzeichnet, dass** die Niederhalteranordnung (25) einen sich entlang der Achse (A) erstreckenden, in das ringförmige Stempelwerkzeug (23) hineinragende inneren Niederhalter (26) und einen das Stempelwerkzeug (23) umschließenden äußeren Niederhalter (27) aufweist.

5. Umformverfahren zur Herstellung einer Überdrucksollbruchstelle (14) in einem Batteriedeckel (10) für ein Batteriezellengehäuse unter Verwendung des Umformwerkzeugs (11) nach einem der vorhergehenden Ansprüche mit folgenden Schritten:
- Positionieren eines umzuformenden Batteriedeckels (10) auf dem Matrizenwerkzeug (24),so dass dessen Unterseite (13) auf der Auflagefläche (37) des Matrizenwerkzeugs (24) aufliegt und die Umformvertiefung (38) des Matrizenwerkzeugs (24) frei bleibt,
- Eindrücken des Stempelteils (32) des Stempelwerkzeugs (23) in den Batteriedeckel (10), wodurch Material des Batteriedeckels (10) in die Umformvertiefung (38) des Matrizenwerkzeugs (24) verdrängt wird und eine zu einer Oberseite (12) des Batteriedeckels (10) offene Sicke (15) entsteht, so dass eine Wandstärke (w) des Batteriedeckels (10) unterhalb der Sicke (15) kleiner ist als die Wandstärke an anderen Stellen des Batteriedeckels (10) und dadurch die Überdrucksollbruchstelle (14) bildet,
- Einformen wenigstens eine Kerbe (50) innerhalb der Sicke (15) mittels eines Kerbwerkzeugs (51).

6. Umformverfahren nach Anspruch 5,
**dadurch gekennzeichnet, dass** der Batteriedeckel (10) vor oder gleichzeitig mit dem Eindrücken des Stempelwerkzeugs (23) in den Batteriedeckel (10) zwischen einer Niederhalteranordnung (25) und der Auflagefläche (37) des Matrizenwerkzeugs (24) eingeklemmt wird.

7. Umformverfahren nach Anspruch 5 oder 6,
**dadurch gekennzeichnet, dass** die Wandstärke des Batteriedeckels (10) unterhalb der Kerbe (50) eine minimale Wandstärke (wmin) hat.

8. Umformverfahren nach einem der Ansprüche 5 bis 7,
**dadurch gekennzeichnet, dass** sich die wenigstens eine Kerbe (50) in Umfangsrichtung nicht ringförmig geschlossen ist.

9. Umformverfahren nach einem der Ansprüche 5 bis 8, **dadurch gekennzeichnet, dass** die Kerbe (50) im Übergangsbereich zwischen einem Sickenboden (17) und einer Sickenflanke (18) eingeformt wird.

## Claims

1. Forming tool for producing an overpressure predetermined breaking point (14) in a battery cover (10) for a battery cell housing, the forming tool comprising:
a die tool (24) which has a forming cavity (38) in a support surface (37), wherein the forming cavity (38) extends around an axis (A) and has a cavity bottom (39), wherein the distance between the support surface (37) and the cavity bottom (39) defines a first depth (t1) in an axial direction (R) parallel to the axis (A),
wherein a cavity inner flank (41) adjoins the cavity bottom (39) at right angle to the axial direction (R) on an inner side of the forming cavity (38) and a cavity outer flank (42) adjoins the cavity bottom (39) on an outer side of the forming cavity (38) opposite the inner side, wherein the shortest distance between the cavity inner flank (41) and the cavity outer flank (42) at right angle to the axial direction (R) defines a first width (b1),
a stamping tool (23) which has a stamping part (32) on its side facing the die tool (24), which extends in the axial direction (R) from a stamping base area (31) to a free end (32), wherein the distance between the free end (33) of the stamping part (32) and the stamping base area (31) defines a second depth (t2),
wherein the stamping part (32) is positioned in the axial direction (R) above the cavity bottom (39) and corresponds in cross-section to a bead (15) of the overpressure predetermined breaking point (14) to be formed in the battery cover (10),
wherein the stamping part (32) has a ring part inner surface (34) extending between the free end (33) and the stamping base area (31) and a ring part outer surface (35) extending between the free end (33) and the stamping base area (31), which are arranged at a distance from one another at right angles to the axial direction (R), wherein the distance between the ring part inner surface (34) and the ring part outer surface (35) defines a second width (b2),
**characterized in that**
the second depth (t2) is larger than the first depth (t1),
the first width (b1) is at least a factor of 2 larger than the second width (b2),
and the forming tool comprises a notching tool (51) arranged to form at least one notch (50) inside the bead (15).

2. Forming tool according to claim 1, **characterized in that** the first width (b1) is at least the factor of 3 or 4 larger than the second width (b2).

3. Forming tool according to anyone of the preceding claims, **characterized in that** a hold-down arrangement (25) is provided which is arranged opposite the die tool (24) and adjacent to the stamping tool (23).

4. Forming tool according to claim 3, **characterized in that** the hold-down arrangement (25) comprises an inner hold-down part (26) extending along the axis (A) and into the ring-shaped stamping tool (23) and an outer hold-down part (27) surrounding the stamping tool (23) .

5. Forming method for producing an overpressure predetermined breaking point (14) in a battery cover (10) for a battery cell housing using the forming tool (11) according to anyone of the preceding claims, comprising the following steps:
- positioning a battery cover (10) to be deformed on the die tool (24) such that its bottom side (13) rests on the support surface (37) of the die tool (24) and the forming cavity (38) of the die tool (24) remains free,
- pressing the stamping part (32) of the stamping tool (23) into the battery cover (10), whereby material of the battery cover (10) is displaced into the forming cavity (38) of the die tool (24) and a bead (15) is created which is open to a top side (12) of the battery cover (10), such that a wall thickness (w) of the battery cover (10) below the bead (15) is smaller than the wall thickness at other locations of the battery cover (10) and thus forms the overpressure predetermined breaking point (14),
- forming at least one notch (50) inside the bead (15) by means of a notching tool (51).

6. Forming method according to claim 5, **characterized in that** the battery cover (10) is clamped between a hold-down arrangement (25) and the support surface (37) of the die tool (24) prior to or concurrently with the pressing of the stamping tool (23) into the battery cover (10).

7. Forming method according to claim 5 or 6, **characterized in that** the wall thickness of the battery cover (10) below the notch (50) has a minimum wall thickness (wmin).

8. Forming method according to anyone of the claims 5 to 7, **characterized in that** the at least one notch (50) is not closed in a ring shape in the circumferential direction.

9. Forming method according to anyone of the claims 5 to 8, **characterized in that** the notch (50) is formed in a transition region between a bead bottom (17) and a bead flank (18).

## Revendications

1. Outil de façonnage (11) destiné à fabriquer un point de rupture théorique de surpression (14) dans un couvercle de batterie (10) pour un boîtier d'élément de batterie,
avec un outil de matriçage (24), qui présente dans une surface d'appui (37) un renfoncement de façonnage (38), qui s'étend autour d'un axe (A) et qui présente une base de renfoncement (39), dans lequel la distance entre la surface d'appui (37) et la base de renfoncement (39) définit une première profondeur (t1) de manière parallèle à l'axe (A) dans une direction axiale (R),
dans lequel se raccordent à la base de renfoncement (39), à angle droit par rapport à la direction axiale (R), un flanc intérieur de renfoncement (41) sur un côté intérieur du renfoncement de façonnage (38) et un flanc extérieur de renfoncement (42) sur un côté extérieur, opposé au côté intérieur, du renfoncement de façonnage (38), dans lequel la distance la plus courte entre le flanc intérieur de renfoncement (41) et le flanc extérieur de renfoncement (42) définit une première largeur (b1) à angle droit par rapport à la direction axiale (R),
avec un outil de poinçonnage (23), qui présente, sur son côté tourné vers l'outil de matriçage (24), une partie de poinçon (32), qui s'étend dans la direction axiale (R) en partant d'une surface de base de poinçon (31) jusqu'à une extrémité libre (33), dans lequel la distance entre l'extrémité (33) de la partie de poinçon (32) et la surface de base de poinçon (31) définit une deuxième profondeur (t2), dans lequel la partie de poinçon (32) est positionnée dans la direction axiale (R) au-dessus de la base de renfoncement (39) et correspond à un point de rupture théorique de surpression (14) dans la section transversale d'une moulure (15) à former dans le couvercle de batterie (10),
dans lequel la partie de poinçon (32) présente une surface intérieure de partie annulaire (34) s'étendant entre l'extrémité libre (33) et la surface de base de poinçon (31) et une surface extérieure de partie annulaire (35) s'étendant entre l'extrémité libre (33) et la surface de base de poinçon (31), qui sont disposées à distance l'une par rapport à l'autre à angle droit par rapport à la direction axiale (R), dans lequel la distance entre la surface intérieure de partie annulaire (34) et la surface extérieure de partie annulaire (35) définit une deuxième largeur (b2), **caractérisé en ce que**
la deuxième profondeur (t2) est plus grande que la première profondeur (t1), que la première largeur (b1) est plus grande que la deuxième largeur (b2) au moins du facteur 2, et que l'outil de façonnage contient un outil d'entaillage (51) qui est mis au point pour former au moins une entaille (50) à l'intérieur de la moulure (15).

2. Outil de façonnage selon la revendication 1, **caractérisé en ce que** la première largeur (b1) est plus grande que la deuxième largeur (b2) d'au moins le facteur 3 ou 4.

3. Outil de façonnage selon l'une quelconque des revendications précédentes, **caractérisé en ce qu'**un ensemble de serre-flancs (25) disposé en vis-à-vis de l'outil de matriçage (24) et de manière adjacente par rapport à l'outil de poinçonnage (23) est présent.

4. Outil de façonnage selon la revendication 3, **caractérisé en ce que** l'ensemble de serre-flancs (25) présente un serre-flanc intérieur (26) s'étendant le long de l'axe (A), dépassant dans l'outil de poinçonnage (23) annulaire et un serre-flanc extérieur (27) entourant l'outil de poinçonnage (23).

5. Procédé de façonnage pour la fabrication d'un point de rupture théorique de surpression (14) dans un couvercle de batterie (10) pour un boîtier d'élément de batterie en utilisant l'outil de façonnage (11) selon l'une quelconque des revendications précédentes, avec des étapes suivantes :
- le positionnement d'un couvercle de batterie (10) à façonner sur l'outil de matriçage (24) de telle sorte que son côté inférieur (13) repose sur la surface d'appui (37) de l'outil de matriçage (24) et le renfoncement de façonnage (38) de l'outil de matriçage (24) reste libre,
- l'enfoncement de la partie de poinçon (32) de l'outil de poinçonnage (23) dans le couvercle de batterie (10), ce qui permet de repousser du matériau du couvercle de batterie (10) dans le renfoncement de façonnage (38) de l'outil de matriçage (24) et de produire une moulure (15) ouverte par rapport à un côté supérieur (12) du couvercle de batterie (10) de telle sorte qu'une épaisseur de paroi (w) du couvercle de batterie (10) sous la moulure (15) est inférieure à l'épaisseur de paroi sur d'autres points du couvercle de batterie (10) et qu'il se forme ainsi un point de rupture théorique de surpression (14),
- la formation d'au moins une entaille (50) à l'intérieur de la moulure (15) au moyen d'un outil d'entaillage (51).

6. Procédé de façonnage selon la revendication 5, **caractérisé en ce que** le couvercle de batterie (10) est coincé entre un ensemble de serre-flancs (25) et la surface d'appui (37) de l'outil de matriçage (24) avant ou simultanément avec l'enfoncement de l'outil de poinçonnage (23) dans le couvercle de batterie (10).

7. Procédé de façonnage selon la revendication 5 ou 6, **caractérisé en ce que** l'épaisseur de paroi du couvercle de batterie (10) présente une épaisseur de paroi minimale (wmin) sous l'entaille (50).

8. Procédé de façonnage selon l'une quelconque des revendications 5 à 7, **caractérisé en ce que** l'au moins une entaille (50) n'est pas fermée de manière annulaire dans la direction périphérique.

9. Procédé de façonnage selon l'une quelconque des revendications 5 à 8, **caractérisé en ce que** l'entaille (50) est formée dans la zone de transition entre un fond de moulure (17) et un flanc de moulure (18).
